# EUROPEAN PATENT SPECIFICATION

(11) **EP 4 272 881 B1**
(45) Date of publication and mention of the grant of the patent: **03.09.2025**
(21) Application number: 21914195.9
(22) Date of filing: 24.12.2021
(51) Int. Cl.: B08B 3/02, B08B 13/00, G01N 35/00

(54) **CARTRIDGE PREPROCESSING SYSTEM FOR USE IN AUTOMATED MOLECULAR DIAGNOSTICS INSTRUMENT**
KASSETTENVORVERARBEITUNGSSYSTEM ZUR VERWENDUNG IN EINEM AUTOMATISCHEN MOLEKULAREN DIAGNOSEINSTRUMENT
SYSTÈME DE PRÉTRAITEMENT DE CARTOUCHE DESTINÉ À ÊTRE UTILISÉ DANS UN INSTRUMENT DE DIAGNOSTIC MOLÉCULAIRE AUTOMATISÉ

(30) Priority: 29.12.2020 CN 202011601452
(43) Date of publication of application: 08.11.2023
(73) Proprietor: Autobio Labtec Instruments Co., Ltd., Zhengzhou, Henan 450016 (CN)
(72) Inventor: WANG, Chao, Zhengzhou, Henan 450016 (CN); ZHAO, Peng, Zhengzhou, Henan 450016 (CN); WU, Pengtao, Zhengzhou, Henan 450016 (CN); PAN, Yang, Zhengzhou, Henan 450016 (CN); LIU, Yaoji, Zhengzhou, Henan 450016 (CN); LI, Zhenkun, Zhengzhou, Henan 450016 (CN); LIU, Cong, Zhengzhou, Henan 450016 (CN)
(74) Representative: Kolster Oy Ab
(86) International application number: PCT/CN2021/141196
(87) International publication number: WO 2022/143458

(56) References cited:
- EP-A2- 1 409 981
- EP-A2- 2 269 026
- WO-A1-2013/168559
- WO-A1-2017/128806
- WO-A1-2020/054336
- CN-A- 104 730 262
- CN-A- 105 733 935
- CN-A- 107 367 622
- CN-A- 111 175 525
- CN-A- 111 596 080
- CN-A- 112 827 906
- CN-B- 107 367 622
- CN-U- 214 133 011
- JP-A- 2011 021 993
- US-A- 5 935 523
- US-A1- 2005 074 363
- US-A1- 2012 122 231
- US-A1- 2012 227 771
- US-A1- 2015 337 400
- US-A1- 2016 313 361
- US-A1- 2020 209 268

## Description

This application claims the benefit of the priority to Chinese Patent Application No. 202011601452.7, titled "CARTRIDGE PREPROCESSING SYSTEM APPLIED TO AUTOMATED MOLECULAR DIAGNOSTICS INSTRUMENT", filed with the China National Intellectual Property Administration on December 29, 2020.

### FIELD

The present application relates to the technical field of automated molecular diagnostics instruments, and in particular to a cartridge preprocessing system applied to an automated molecular diagnostics instrument.

### BACKGROUND

At present, during the use of automated molecular diagnostic instruments, a barrier film on the top of a cartridge is pierced with a millimeter tip or a film perforator. In order to avoid cross-contamination of reagents in the cartridge, piercing members, each of which is a disposable product and cannot be reused, are used for piercing, which leads to the high equipment cost and more medical waste, thereby polluting the environment.

To sum up, how to provide a cartridge preprocessing system with a reusable piercing member has attracted the attention of those skilled in the art.

A piercer washing port is known in US2016313361A1. The piercer washing port is provided at a position on the trajectory of a piercer differing from the sampling position, is cylindrically shaped and has an opening for inserting the piercer in the upper surface and a washing space for housing the piercer inserted from the opening. Air injection ports for injecting air and washing liquid expelling ports for expelling water serving as a washing liquid are provided on the inside wall surface of the pierce washing port. The air injection ports are provided at four locations equally spaced on the periphery along the inside wall surface of the washing space. The washing liquid expelling ports are provided at four locations equally spaced on the periphery along the inside wall surface of the washing space at different positions than those of the air injection ports.

A probe drive mechanism for driving a probe and a piercer drive mechanism for driving a piercer are known in WO2013168559A1, which are provided separately and enabled to operate independently of each other. The operations of the probe drive mechanism and the piercer drive mechanism are controlled by a control unit, and the control unit is provided with a sample intake preparing means configured so as to execute a sample intake preparation operation, a sample intake means configured so as to execute a sample intake operation, and a dispensing means configured so as to execute a dispensing operation. The sample intake preparing means is configured so as to execute a sample intake preparation operation in which, while the probe is being driven at a position different than an intake position, a cap of the next object-of-sampling sample container is penetrated by a piercer.

A fully-automatic blood type analysis system is known in CN107367622B, which includes a host computer, a medium machine, a card box for storing a micro-column gel card, a mechanical arm subsystem, a micro-column gel card recognition subsystem, a puncturing subsystem, a sample injection subsystem, a centrifugation subsystem and an image acquisition and processing subsystem, wherein the host computer includes a data storage subsystem, a display subsystem and an image analysis and judgment subsystem, and transmits a command to the medium computer, the command is analyzed by the medium computer, the analyzed command is assigned to the corresponding subsystem so as to perform the command task, and the performing result is fed back to the host computer through the medium machine.

A method and apparatus for accessing a sealed container are known in US5935523A. A piercer and a probe are provided which are mounted to an XYZ positioning mechanism and are controlled such that the piercer passes through a stopper of the container, forming a cut therein through which the probe may subsequently enter the container. A foot mechanism is provided which is held against the stopper or seal for the container during piercer or probe removal for stripping purposes and through which the probe and piercer pass, the size and shape of the foot being such that, for both piercing and probing operations, it is over only a single container. The piercer and probe are operated such that the one not being used is in each instance in a raised position relative to the one being used. A novel lubrication station is provided in which the piercer is dipped prior to use to facilitate the piercing operation, to coat the cut and to minimize stopper debris. A wash station is also provided.

A piercing station for piercing sample container caps or thick stoppers is known in EP1409981A2. The piercing station has a structural frame with two vertical guide rods. A carriage assembly is slidably mounted on the guide rods and is further driven to move up and down along the guide rods. The carriage assembly carries a blade holder, which in turn holds a piercing blade assembly. The blade assembly includes a center blade and two cross blades interlocked together, such that the blade assembly has a generally modified "H"-shaped cross section for piercing a cap on the sample container.

An automatic analysis device is known in WO2020054336A1. This automatic analysis device is provided with: a reagent container which accommodates a reagent and which has attached thereto a perforable lid; a perforation unit for perforating the lid; and a reagent suction nozzle that is inserted into a hole formed by perforation and that sucks up the reagent. The automatic analysis device is characterized by being further provided with a state storage unit that stores the state as to whether the reagent container is in an unused state or in a used state, and a state update unit that, when the lid is perforated by the perforation unit while the reagent container is in an unused state, updates the state stored in the state storage unit to the used state.

An automatic fluorescence quantitative immunoassay analyzer and a method are known in WO2017128806A1. The automatic fluorescence quantitative immunoassay analyzer includes a feeding device, an incubation device, a sampling device, a data acquisition device, a reagent card device and a system control module; and the elements cooperate with each other through the devices described above and the modules are organically combined together, achieving the purpose of automatic quantitative immunoassay.

It is known in US2005074363A1 a sampling aliquotter for aspirating aliquot portions of sample fluid from a closed container and for dispensing aliquot portions into a vessel using horizontal and vertical drives to drive a probe into the closed container, to position the probe above the vessel, and to lower the probe into a cleansing module.

Systems and methods for processing and analyzing samples are known in US2015337400A1. The system may process samples, such as biological fluids, using assay cartridges which can be processed at different processing locations. In some cases, the system can be used for PCR processing. The different processing locations may include a preparation location where samples can be prepared and an analysis location where samples can be analyzed. To assist with the preparation of samples, the system may also include a number of processing stations which may include processing lanes. During the analysis of samples, in some cases, thermal cycler modules and an appropriate optical detection system can be used to detect the presence or absence of certain nucleic acid sequences in the samples.

Apparatuses, systems, method, reagents, and kits for conducting assays as well as process for their preparation are known in EP2269026A2. They are particularly well suited for conducting automated sampling, sample preparation, and analysis in a multi-well plate assay format. For example, they may be used for automated analysis of particulates in air and/or liquid samples derived therefrom in environmental monitoring.

A rinsing and drying apparatus of a clinical analyzer probe drain station is known in US2012227771A1. The rinsing and drying apparatus has a group of nozzles that are offset from a longitudinal axis of a probe passage and may be inclined and oriented to provide tangentially oriented fluid-jet trajectories exiting into the sample probe passage. The offset nozzles, nozzle orientation, and cavity geometrical features of the device permit the drying capacity of probe-impinging planar air-knife jets to be maximized by stabilizing local internal fluid movement to form a swirling (e.g., helical) gas flow field directed away from a drying region and toward a vacuum exhaust. The rinsing and drying apparatus eliminates rinse water re-circulated entrainment and up-wash (spitting) during the air-knife drying operation.

A specimen testing device and method thereof are known in US2012122231A1. The specimen testing device includes one, two or more test cartridge containers which include a plurality of accommodation parts which accommodate or can accommodate a specimen and one, two or more reagent solutions or testing tools used for testing the specimen, and which visibly display specimen information for identifying or managing the specimen and test information showing test content; an automatic testing unit which is attached with or supports the testing tools and which causes a reaction of the specimen and the reagent solution accommodated in the test cartridge containers to obtain a predetermined optical state; an optical measurement unit which measures the optical state obtained by the automatic testing unit; and a digital camera which captures an image of content including the specimen information and the test information and displayed on the one, two or more test cartridge containers to obtain image data.

### SUMMARY

In view of this, an object of the present application is to provide a cartridge preprocessing system applied to an automated molecular diagnostics instrument, which can clean a piercing member, so that the piercing member is reusable, thereby reducing the cost and medical waste.

In order to realize the above object, the following technical solutions are provided according to the present application.

A cartridge preprocessing system applied to an automated molecular diagnostics instrument includes a piercing device, a cleaning device and a transmission device.

The piercing device includes a driving assembly and a piercing member, where the driving assembly is configured to control the piercing member to alternately move to a piercing station and a cleaning station, where the piercing member is configured to pierce a barrier film of a cartridge that moves to the piercing station.

The cleaning device is configured to clean the piercing member that moves to the cleaning station.

The transmission device includes a housing and a pushing part. A transmission passage is arranged inside the housing, and the pushing part is configured to push the cartridge to move in the transmission passage. The driving assembly and the cleaning device each is mounted to the housing, and a piercing port for the piercing member to extend into is arranged at the housing. The housing is provided with a filling port for adding reagent to the cartridge.

In an embodiment, the piercing member includes a cylinder, an upper end of the cylinder is connected with the driving assembly, and a lower end of the cylinder is of a quadrangular pyramid structure.

In an embodiment, the driving assembly includes a lifting driving part and a swinging driving part, where the lifting driving part is connected with the swinging driving part and configured to control the lifting of the swinging driving part, and the swinging driving part is connected with the piercing member and configured to control the piercing member to swing between the piercing station and the cleaning station.

In an embodiment, the lifting driving part includes a lifting motor and a lifting guide rail, the swinging driving part includes a swinging fixing seat, a swinging motor and a swinging arm, where the swinging fixing seat is fixed to an output end of the lifting motor, and the swinging fixing seat is in sliding fit with the lifting guide rail, and where the swinging motor is mounted to the swinging fixing seat, an output shaft of the swinging motor is connected with the swinging arm through a swinging transmission assembly, and the piercing member is fixed to the swinging arm.

In an embodiment, the cartridge preprocessing system further includes an information scanning device for scanning a label at an outer side of the cartridge, where the information scanning device is mounted to the housing, and a code scanning gap for avoiding the information scanning device is arranged at the housing.

In an embodiment, the cleaning device includes a cleaning hole for accommodating the piercing member, a cleaning liquid filling port for cleaning liquid to enter the cleaning hole, and a liquid discharge passage for discharging liquid in the cleaning hole.

In an embodiment, the cleaning hole has an upward opening and is cylindrical, an axis of the cleaning liquid filling port is spaced apart from a center of the cleaning hole by a preset distance, where the cleaning liquid forms a vortex in the cleaning hole.

In an embodiment, the number of the cleaning liquid filling port is at least two, and all of the at least two cleaning liquid filling ports are sequentially distributed along a circumferential direction of the cleaning hole.

With the above solutions, the cartridge preprocessing system applied to an automated molecular diagnostics instrument according to the present application has the following advantageous effects.

The cartridge preprocessing system applied to an automated molecular diagnostics instrument according to the present application includes the piercing device and the cleaning device; the piercing device includes the driving assembly and the piercing member, the driving assembly is configured to control the piercing member to alternately move to the piercing station and the cleaning station. The piercing member is configured to pierce the barrier film of the cartridge that moves to the piercing station; and the cleaning device is configured to clean the piercing member that moves to the cleaning station.

The cartridge, when in use, is located at the piercing station, and the driving assembly controls the piercing member to pierce the barrier film of the cartridge at the piercing station. In this process, the reagent adhered to the barrier film of the cartridge may be adhered to the piercing member. If the reagent is not cleaned, when the piercing member repeatedly pierces a barrier film, the reagent of a cartridge adhered to the piercing member is mixed with the reagent of a next cartridge, affecting a test result of the next cartridge; and the piercing member also mixes the reagent in a current cartridge with other reagents in the current cartridge, resulting in an abnormal test result of the current cartridge.

In the cartridge preprocessing system applied to an automated molecular diagnostics instrument according to the present application, after the piercing is completed, the driving assembly controls the piercing member to move to the cleaning station. The piercing member is washed by the cleaning device to remove the reagent adhered to the piercing member. When a next barrier film needs to be pierced, the driving assembly drives the piercing member back to the piercing station again.

In the cartridge preprocessing system applied to an automated molecular diagnostics instrument according to the present application, the piercing member is cleaned by the cleaning device, so that the piercing member can be reused, which reduces the use of consumables, reduces the cost of users and is more environmentally friendly.

### BRIEF DESCRIPTION OF THE DRAWINGS

To describe the technical solutions in the embodiments of the present application or in the conventional technology more clearly, the accompanying drawings used in description of the embodiments or the conventional technology are briefly introduced hereinafter. Apparently, the accompanying drawings in the following description show merely the embodiments of the present application, and for those skilled in the art, other drawings can be obtained based on the provided accompanying drawings without creative efforts.
FIG. 1 is a schematic structural diagram of a cartridge preprocessing system applied to an automated molecular diagnostics instrument according to an embodiment of the present application;
FIG. 2 is a schematic partial structural diagram of a transmission device according to an embodiment of the present application;
FIG. 3 is a schematic structural diagram of a piercing device according to the embodiment of the present application;
FIG. 4 is a schematic structural diagram of a piercing member according to the embodiment of the present application;
FIG. 5 is a schematic structural diagram of a cleaning device according to the embodiment of the present application;
FIG. 6 is a front sectional view of the cleaning device shown in FIG. 5; and
FIG. 7 is a top sectional view of the cleaning device shown in FIG. 5.

The reference numerals in the drawings are listed as follows.
transmission device 1, housing 11, passage 111, piercing port 112, filling port 113, guiding member 114, pushing part 12, pushing motor 121, synchronous belt 122, pushing guide rail 123, sliding block 124, pusher 125, origin sensor 126; piercing device 2, piercing member 21, driving assembly 22, lifting driving part 221, lifting motor 2211, lifting guide rail 2212, swinging driving part 222, swinging fixing seat 2221, swinging motor 2222 swinging transmission assembly 2223, swinging arm 2224; cleaning device 3, cleaning hole 31, cleaning fluid filling port 32, liquid discharge passage 33; information scanning device 4; cartridge 5.

### DETAILED DESCRIPTION OF THE EMBODIMENTS

Generally, a cartridge 5 includes a reaction bin and multiple reagent holes. In order to better store reagents and prevent cross contamination of reagents in the cartridge 5, a barrier film is provided at the top of each reagent hole to seal the reagents in the reagent holes respectively. When in use, the reagents in the reagent holes are put into the reaction bin. In order to access the reagents in the reagent holes in the cartridge 5, the barrier film at the top of the cartridge 5 is required to be pierced first.

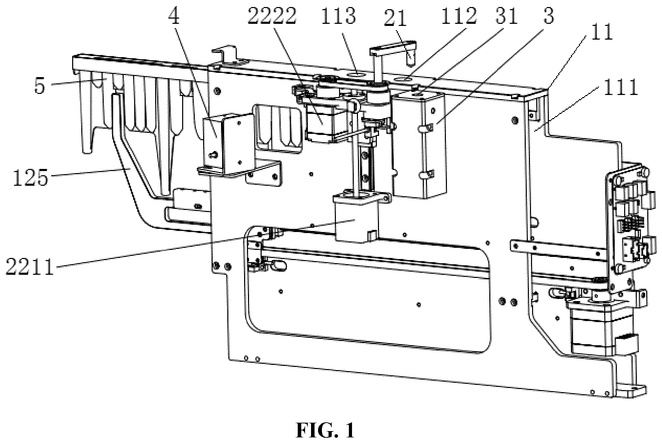

Referring to FIG. 1, a cartridge preprocessing system applied to an automated molecular diagnostics instrument according to the present application includes a piercing device 2 and a cleaning device 3.

Specifically, the piercing device 2 includes a driving assembly 22 and a piercing member 21. The driving assembly 22 may be a mechanical arm or other driving structures. The driving assembly 22 is connected with the piercing member 21 and controls the movement of the piercing member 21, so that the piercing member 21 alternately moves to a piercing station and a cleaning station in a preset path. The piercing member 21 has a relatively sharp tip.

In the operation of the cartridge preprocessing system with the above structure, when the piercing member 21 is moved to the piercing station under the control of the driving assembly 22, the piercing member 21 pierces the barrier film of the cartridge 5 by its own structure. When the piercing member 21 moves to the cleaning station, the cleaning device 3 cleans the piercing member 21 with cleaning liquid. The cartridge preprocessing system performs a relevant preprocessing function on the cartridge 5 before a test through cooperation of the piercing device 2 and the cleaning device 3. In the cartridge preprocessing system, the barrier film is pierced through the piercing member 21, which solves the problem of piercing the barrier film on the top of the cartridge 5 before using the reagent in the cartridge 5. In addition, in the cartridge preprocessing system, the piercing member 21 is cleaned by using the cleaning device 3, so that the piercing member 21 can be reused, thereby reducing the use of consumables and reducing the cost of users. In addition, the cartridge preprocessing system has the advantages of simple structure, high safety and reliability, low risk of system pollution, and convenient maintenance.

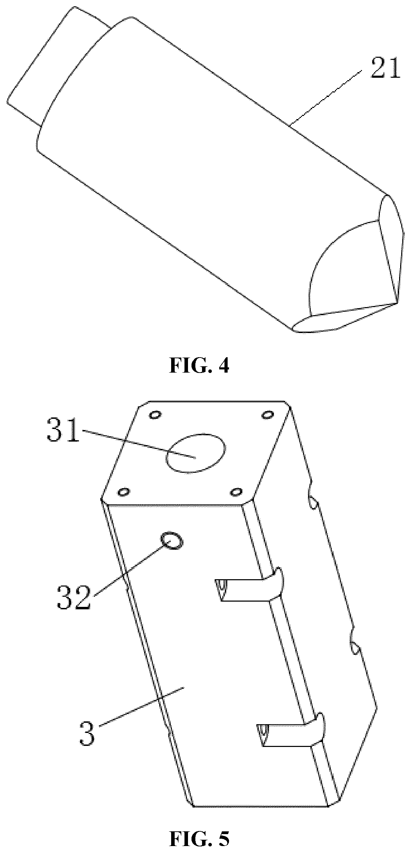

Further, in an embodiment, referring to FIG. 4, the piercing member 21 includes a cylinder, where an upper end of the cylinder is connected with the driving assembly 22, for example, the upper end of the cylinder is connected with a swinging arm 2224 in the driving assembly 22. A lower end of the cylinder is of a quadrangular pyramid structure. In an embodiment, the reagent hole of the cartridge 5 is generally cylindrical, and the top of the reagent hole is square-shaped. Correspondingly, a body of the piercing member 21 is of a cylindrical structure, and a diameter of the cylinder is adapted to a cross section of the reagent hole of the cartridge 5. A lower end of the piercing member 21 is of a quadrangular oblique cutting structure, that is, a quadrangular pyramid with sharp corners. The lower end of the piercing member 21 corresponds to a square opening of the reagent hole of the cartridge 5, so as to ensure that a tip of the piercing member 21 can be fitted with four side walls of the reagent hole after the barrier film is pierced, thereby not affecting a subsequent reagent taking operation. The piercing member 21 should have a certain hardness and may be made of metal.

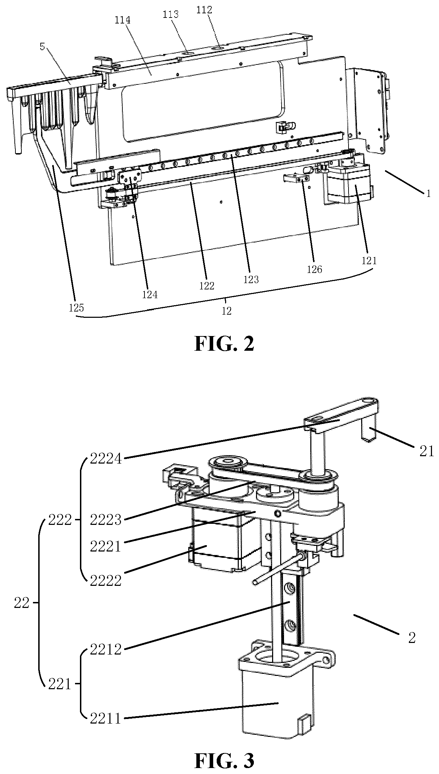

Further, in an embodiment, referring to FIG. 3, the driving assembly 22 includes a lifting driving part 221 and a swinging driving part 222. The lifting driving part 221 is connected with the swinging driving part 222 and controls the lifting of the swinging driving part 222. The swinging driving part 222 is connected with the piercing member 21 and controls the piercing member 21 to swing between the piercing station and the cleaning station. Specifically, by means of swinging, the piercing member 21 can be kept away from a preset transmission direction of the cartridge 5 after a piecing operation is completed, facilitating spatially arranging the cleaning device 3.

Further, in an embodiment, the lifting driving part 221 includes a lifting motor 2211 and a lifting guide rail 2212, the swinging driving part 222 includes a swinging fixing seat 2221, a swinging motor 2222, a swinging transmission assembly 2223 and a swinging arm 2224. The lifting motor 2211 may be a screw motor, the swinging fixing seat 2221 is fixed to an output end of the lifting motor 2211, and the swinging fixing seat 2221 is in sliding fit with the lifting guide rail 2212. A casing of the swinging motor 2222 is fixedly connected with the swinging fixing seat 2221, and an output shaft of the swinging motor 2222 is connected with the swinging arm 2224 through the swinging transmission assembly 2223. The swinging transmission assembly 2223 may be a coupling, a transmission belt or other transmission structures. The piercing member 21 is fixed to the swinging arm 2224. During operation, the lifting motor 2211 controls the swinging driving part 222 and the piercing member 21 to move upward or downward as a whole, and a starting position and an ending position of the movement may be detected by sensors respectively and controlled by electric control.

In an embodiment, the cartridge preprocessing system applied to an automated molecular diagnostics instrument further includes a transmission device 1. The transmission device 1 is configured to control the movement of the cartridge 5, for example, the transmission device 1 may control the cartridge 5 to move to the piercing station, control the cartridge 5 to move from the piercing station to the cleaning station, or control the cartridge 5 to move from the cleaning station to a subsequent processing station.

In an embodiment, the transmission device 1 includes a housing 11 and a pushing part 12, a transmission passage 111 is arranged inside the housing 11, the pushing part 12 is configured to push the cartridge 5 to move in the transmission passage 111. The driving assembly 22 and the cleaning device 3 each is mounted to the housing 11, a piercing port 112 for the piercing member 21 to extend into is arranged at the housing 11. Specifically, the cartridge 5 is encapsulated in the passage 111 inside the housing 11. The housing 11 may be provided with a guiding member 114 to provide a guiding function for the movement of the cartridge 5. The housing 11 is provided with a piercing port 112 for the piercing member 21 to pass through, thereby piercing the barrier film.

In an embodiment, referring to FIG. 2, the pushing part 12 includes a pushing motor 121, a driven wheel, a synchronous belt 122, a pushing guide rail 123, a sliding block 124 and a pusher 125. The pushing motor 121 may be a stepping motor, a driving shaft and a driven wheel of the pushing motor 121 are connected through the synchronous belt 122, the pushing guide rail 123 is fixed to the housing 11, the sliding block 124 is in sliding fit with the pushing guide rail 123, the sliding block 124 is fixedly connected with the synchronous belt 122 and the pusher 125, and the pusher 125 may be embedded in the middle of the cartridge 5 and push the cartridge 5 to move. During operation, the pushing motor 121 rotates, and the pusher 125 is driven to move by the synchronous belt 122. The pusher 125 pushes the cartridge 5 to move in a preset direction in the passage 111, thereby controlling the cartridge 5 to move to various functional positions, for example, an information reading position, a reagent filling position and a piercing position of the cartridge 5, to realize relevant functions. Then, after information reading, reagent filling and barrier film piercing are performed on the cartridge 5 in the passage 111, the cartridge 5 is driven to move reversely in the passage 111 and exit from the passage 111 through the reverse rotation of the pushing motor 121, so as to carry out follow-up operations of a test. The movement of the pusher 125 is controlled by the pushing motor 121, and a starting position and an ending position of the movement may be detected by an origin sensor 126 and a limit sensor respectively, and controlled by electric control.

It is understandable that the transmission device 1 may also control the movement of the cartridge 5 by other means in the conventional technology. For example, the transmission device 1 may be a manipulator.

Further, in an embodiment, the cartridge preprocessing system applied to an automated molecular diagnostics instrument further includes an information scanning device 4. The information scanning device 4 is used to scan a label at an outer side of the cartridge 5. Specifically, the label is generally provided at the outer side of the cartridge 5, the label stores information including the type, manufacturing information, serial number, expiration date, instruction manual, or the like of the cartridge 5, and the information are stored in machine-readable ways such as barcode, QR code, and RFID identifier. The information scanning device 4 is a code reader; the code reader may be a device capable of reading barcode or QR code, or a device capable of reading RFID identifier. Before sample processing, when the cartridge 5 is loaded in the system, the information scanning device 4 reads the information on the label of the cartridge 5 in advance, so that the information can be transferred in the system, solving the problem of reading the information on the cartridge 5 into the system and transferring the information in the system. In the actual arrangement, the information scanning device 4 may be mounted to the housing 11; accordingly, a code scanning gap for avoiding the information scanning device 4 is arranged at the housing 11.

Further, in an embodiment, the housing 11 is provided with a filling port 113, and reagent may be added to the cartridge 5 through the filling port 113.

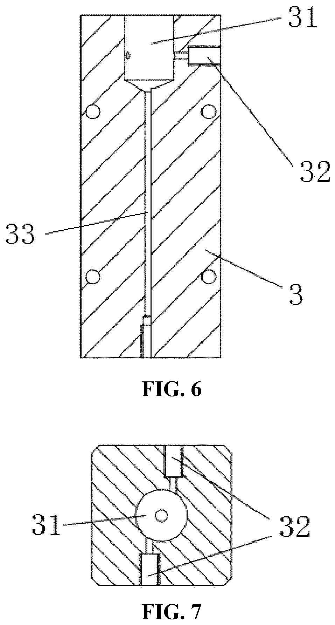

Further, in an embodiment, referring to FIG. 5 and FIG. 6, the cleaning device 3 includes a cleaning hole 31, a cleaning liquid filling port 32, and a liquid discharge passage 33. The cleaning hole 31 is configured to accommodate the piercing member 21, the cleaning liquid filling port 32 and the liquid discharge passage 33 are communicated with the cleaning hole 31, the cleaning liquid filling port 32 allows the cleaning liquid to enter the cleaning hole 31, and the liquid discharge passage 33 is configured to discharge the liquid in the cleaning hole 31. When in use, the cleaning liquid filling port 32 needs to be connected with a cleaning container through a pipeline, and the cleaning device is further equipped with a power source for driving the cleaning liquid to flow. The power source may be a diaphragm pump or a peristaltic pump, and the piercing member 21 may be continuously washed by flowing cleaning liquid to achieve the cleaning effect.

Further, in an embodiment, referring to FIG. 6 and FIG. 7, the cleaning hole 31 has an upward opening and is cylindrical; the cleaning liquid filling port 32 is communicated with the cleaning hole 31 from a side portion of the cleaning hole 31. When viewed from a projection of the cleaning hole 31 in an axial direction, an axis of the cleaning liquid filling port 32 is spaced apart from a center of the cleaning hole 31 by a preset distance. Specifically, the cleaning liquid filling port 32 extends along a direction of a secant of the cleaning hole 31, and the secant is not the diameter of the cleaning hole. That is, the cleaning liquid filling port 32 is offset from the center of the cleaning hole 31, rather than facing towards the center of the cleaning hole 31. With the above structure, after the cleaning liquid is filled into the cleaning hole 31, a vortex may be formed in the cleaning hole 31, which facilitates cleaning the piercing member 21 more cleaner.

Further, in an embodiment, the number of the cleaning liquid filling port 32 is at least two, and all of the at least two cleaning liquid filling ports 32 are sequentially distributed along a circumferential direction of the cleaning hole 31. Multiple cleaning liquid filling ports 32 may further promote the cleaning liquid to form a vortex, so as to optimize the cleaning effect. It is preferable that the number of the cleaning liquid filling ports 32 is two.

The working flow of the cartridge preprocessing system applied to an automated molecular diagnostics instrument with the above structure is as follows.

The pusher 125 pushes the cartridge 5 into the passage 111 until the label stuck on a side face of the cartridge 5 is directly facing towards the information scanning device 4, the information scanning device 4 reads the information on the label of the cartridge 5.

After the information on the cartridge 5 is read, the transmission device 1 pushes the cartridge 5 to move forward until the reaction bin on the cartridge 5 is directly facing towards the filling hole, the reagent stored in a reagent storage area of the instrument is filled by the reagent filling device at this position.

After reading the information on the cartridge 5, the pusher 125 pushes the cartridge 5 forward along the passage 111 in the housing 11, until the reagent hole covered by the barrier film is aligned with the piercing port 112 below the piercing member 21, the lifting motor 2211 drives the piercing member 21 to move downwards, and the barrier film on the cartridge 5 is pierced by a tip of the piercing member 21. There is a certain space between a liquid level in the reagent hole of the cartridge 5 and the barrier film at the top of the cartridge 5. After the piercing member 21 pierces the barrier film at the top of the cartridge 5, a lower end of the piercing member 21 is not in contact with the reagent in the reagent hole of the cartridge 5.

Since the reagent adhered to the barrier film may be adhered to the tip of the piercing member 21 after the barrier film of the reagent hole of the cartridge 5 is pierced, if the piercing member 21 is not cleaned, the reagent adhered to the piercing member 21 is mixed with the reagent of a next cartridge 5 when the piercing member 21 pierces again, affecting a test result of the next cartridge 5; or the reagents in the reagent holes of a current cartridge 5 are mixed, resulting in an abnormal test result of the current cartridge 5. Therefore, after the barrier film on the top of the cartridge 5 is pierced, the tip of the piercing member 21 needs to be cleaned.

After the barrier film of the cartridge 5 is pierced, the lifting motor 2211 drives the piercing member 21 to move upward. When the tip of the piercing member 21 fully moves above the passage 111, the piercing member 21 is driven to swing above the cleaning hole 31 by the swinging driving part 222, the lifting motor 2211 drives the piercing member 21 to move downward until the piercing member 21 enters into the cleaning hole 31 of the cleaning device 3. The power source operates to pump out the cleaning liquid in a cleaning container, and the tip of the piercing member 21 is cleaned through the cleaning liquid filling port 32 of the cleaning device 3. After the tip is cleaned, the lifting motor 2211 rotates again to lift up the piercing member 21 until the tip of the piercing member 21 is higher than the top of the passage 111, the swinging driving part 222 operates again and drives the piercing member 21 to a position above the piercing port 112. Then, the transmission device 1 pushes the cartridge 5 forward again until a next reagent hole on the cartridge 5 is aligned with the piercing port 112, the piercing device 2 and the cleaning device 3 may enter a next cycle until all of barrier films on the top of the cartridge 5 are pierced.

When all of barrier films on the top of the cartridge 5 are pierced, the pushing motor 121 in the pushing part 12 of the transmission device 1 rotates reversely and pushes the cartridge 5 out of the passage 111. The cartridge 5 is pushed to a next operation position under the action of the transmission device 1 for subsequent operation.

## Claims

1. A cartridge preprocessing system applied to an automated molecular diagnostics instrument, comprising:
a piercing device (2) comprising a driving assembly (22) and a piercing member (21), wherein the driving assembly (22) is configured to control the piercing member (21) to alternately move to a piercing station and a cleaning station, wherein the piercing member (21) is configured to pierce a barrier film of a cartridge (5) that moves to the piercing station;
a cleaning device (3), configured to clean the piercing member (21) that moves to the cleaning station; and
a transmission device (1) comprising a housing (11) and a pushing part (12),
**characterized in that**
a transmission passage (111) is arranged inside the housing (11), the pushing part (12) is configured to push the cartridge (5) to move in the transmission passage (111),
the driving assembly (22) and the cleaning device (3) each is mounted to the housing (11), and a piercing port (112) for the piercing member (21) to extend into is arranged at the housing (11), and
the housing (11) is provided with a filling port (113) for adding reagent to the cartridge (5).

2. The cartridge preprocessing system applied to an automated molecular diagnostics instrument according to claim 1, wherein the piercing member (21) comprises a cylinder, an upper end of the cylinder is connected with the driving assembly (22), and a lower end of the cylinder is of a quadrangular pyramid structure.

3. The cartridge preprocessing system applied to an automated molecular diagnostics instrument according to claim 1, wherein the driving assembly (22) comprises a lifting driving part (221) and a swinging driving part (222), wherein the lifting driving part (221) is connected with the swinging driving part (222) and is configured to control the lifting of the swinging driving part (222), and the swinging driving part (222) is connected with the piercing member (21) and configured to control the piercing member (21) to swing between the piercing station and the cleaning station.

4. The cartridge preprocessing system applied to an automated molecular diagnostics instrument according to claim 3, wherein
the lifting driving part (221) comprises a lifting motor (2211) and a lifting guide rail (2212),
the swinging driving part (222) comprises a swinging fixing seat (2221), a swinging motor (2222) and a swinging arm (2224),
the swinging fixing seat (2221) is fixed to an output end of the lifting motor (2211), and the swinging fixing seat (2221) is in sliding fit with the lifting guide rail (2212), and
the swinging motor (2222) is mounted to the swinging fixing seat (2221), an output shaft of the swinging motor (2222) is connected with the swinging arm (2224) through a swinging transmission assembly (2223), and the piercing member (21) is fixed to the swinging arm (2224).

5. The cartridge preprocessing system applied to an automated molecular diagnostics instrument according to claim 1, further comprising an information scanning device (4) for scanning a label at an outer side of the cartridge (5), wherein the information scanning device (4) is mounted to the housing (11), and a code scanning gap for avoiding the information scanning device (4) is arranged at the housing (11).

6. The cartridge preprocessing system applied to an automated molecular diagnostics instrument according to any one of claims 1 to 5, wherein the cleaning device (3) comprises a cleaning hole (31) for accommodating the piercing member (21), a cleaning liquid filling port (32) for cleaning liquid to enter the cleaning hole (31), and a liquid discharge passage (33) for discharging liquid in the cleaning hole (31).

7. The cartridge preprocessing system applied to an automated molecular diagnostics instrument according to claim 6, wherein the cleaning hole (31) has an upward opening and is cylindrical, an axis of the cleaning liquid filling port (32) is spaced apart from a center of the cleaning hole (31) by a preset distance, wherein the cleaning liquid forms a vortex in the cleaning hole (31).

8. The cartridge preprocessing system applied to an automated molecular diagnostics instrument according to claim 7, wherein the number of the cleaning liquid filling port (32) is at least two, and all of the at least two cleaning liquid filling ports (32) are sequentially distributed along a circumferential direction of the cleaning hole (31).

## Patentansprüche

1. Kassettenvorverarbeitungssystem, das auf einem automatisierten molekularen Diagnoseinstrument angewandt wird, umfassend:
eine Stechvorrichtung (2), die eine Antriebsanordnung (22) und ein Stechelement (21) umfasst, wobei die Antriebsanordnung (22) dazu ausgestaltet ist, das Stechelement (21) derart zu steuern, dass es sich abwechselnd zu einer Stechstation und einer Reinigungsstation bewegt, wobei das Stechelement (21) dazu ausgestaltet ist, eine Barrierefolie einer Kassette (5) zu stechen, welche sich zur Stechstation bewegt;
eine Reinigungsvorrichtung (3), die dazu ausgestaltet ist, das Stechelement (21) zu reinigen, das sich zur Reinigungsstation bewegt; und
eine Übertragungsvorrichtung (1), die ein Gehäuse (11) und einen Drückteil (12) umfasst,
**dadurch gekennzeichnet, dass**
ein Übertragungsdurchgang (111) im Inneren des Gehäuses (11) angeordnet ist, wobei der Drückteil (12) dazu ausgestaltet ist, die Kassette (5) derart zu drücken, dass sie sich in dem Übertragungsdurchgang (111) bewegt,
die Antriebsanordnung (22) und die Reinigungsvorrichtung (3) jeweils an dem Gehäuse (11) montiert sind und eine Stechöffnung (112) für das Stechelement (21), damit es sich dort hinein erstreckt, an dem Gehäuse (11) angeordnet ist, und
das Gehäuse (11) mit einer Füllöffnung (113) zum Zugeben von Reagens zur Kassette (5) versehen ist.

2. Kassettenvorverarbeitungssystem, das auf einem automatisierten molekularen Diagnoseinstrument angewandt wird, nach Anspruch 1, wobei das Stechelement (21) einen Zylinder umfasst, ein oberes Ende des Zylinders mit der Antriebsanordnung (22) verbunden ist und ein unteres Ende des Zylinders eine viereckige Pyramidenstruktur aufweist.

3. Kassettenvorverarbeitungssystem, das auf einem automatisierten molekularen Diagnoseinstrument angewandt wird, nach Anspruch 1, wobei die Antriebsanordnung (22) einen Hebeantriebsteil (221) und einen Schwenkantriebsteil (222) umfasst, wobei der Hebeantriebsteil (221) mit dem Schwenkantriebsteil (222) verbunden ist und dazu ausgestaltet ist, das Heben des Schwenkantriebsteils (222) zu steuern, und der Schwenkantriebsteil (222) mit dem Stechelement (21) verbunden ist und dazu ausgestaltet ist, das Stechelement (21) zu steuern, um zwischen der Stechstation und der Reinigungsstation zu schwenken.

4. Kassettenvorverarbeitungssystem, das auf einem automatisierten molekularen Diagnoseinstrument angewandt wird, nach Anspruch 3, wobei
der Hebeantriebsteil (221) einen Hebemotor (2211) und eine Hebeführungsschiene (2212) umfasst,
der Schwenkantriebsteil (222) einen Schwenkbefestigungssitz (2221), einen Schwenkmotor (2222) und einen Schwenkarm (2224) umfasst,
der Schwenkbefestigungssitz (2221) an einem Abgabeende des Hebemotors (2211) befestigt ist, und der Schwenkbefestigungssitz (2221) in Schiebeverbindung mit der Hebeführungsschiene (2212) steht, und
der Schwenkmotor (2222) an dem Schwenkbefestigungssitz (2221) montiert ist, eine Abgabewelle des Schwenkmotors (2222) durch eine Schwenkübertragungsanordnung (2223) mit dem Schwenkarm (2224) verbunden ist, und das Stechelement (21) an dem Schwenkarm (2224) befestigt ist.

5. Kassettenvorverarbeitungssystem, das auf einem automatisierten molekularen Diagnoseinstrument angewandt wird, nach Anspruch 1, ferner umfassend eine Informationsabtastvorrichtung (4) zum Abtasten eines Etiketts an einer Außenseite der Kassette (5), wobei die Informationsabtastvorrichtung (4) an dem Gehäuse (11) montiert ist, und eine Codeabtastlücke zum Umgehen der Informationsabtastvorrichtung (4) an dem Gehäuse (11) angeordnet ist.

6. Kassettenvorverarbeitungssystem, das auf einem automatisierten molekularen Diagnoseinstrument angewandt wird, nach einem der Ansprüche 1 bis 5, wobei die Reinigungsvorrichtung (3) ein Reinigungsloch (31) zum Aufnehmen des Stechelements (21), eine Reinigungsflüssigkeitsfüllöffnung (32) für den Eintritt von Reinigungsflüssigkeit in das Reinigungsloch (31) und einen Flüssigkeitsablassdurchgang (33) zum Ablassen von Flüssigkeit in dem Reinigungsloch (31) umfasst.

7. Kassettenvorverarbeitungssystem, das auf einem automatisierten molekularen Diagnoseinstrument angewandt wird, nach Anspruch 6, wobei das Reinigungsloch (31) eine aufwärts gerichtete Öffnung aufweist und zylindrisch ist, eine Achse der Reinigungsflüssigkeitsfüllöffnung (32) um einen voreingestellten Abstand von einer Mitte des Reinigungslochs (31) beabstandet ist, wobei die Reinigungsflüssigkeit einen Wirbel in dem Reinigungsloch (31) bildet.

8. Kassettenvorverarbeitungssystem, das auf einem automatisierten molekularen Diagnoseinstrument angewandt wird, nach Anspruch 7, wobei die Anzahl der Reinigungsflüssigkeitsfüllöffnungen (32) mindestens zwei beträgt und sämtliche von den mindestens zwei Reinigungsflüssigkeitsfüllöffnungen (32) aufeinanderfolgend entlang einer Umfangsrichtung des Reinigungslochs (31) verteilt sind.

## Revendications

1. Système de prétraitement de cartouche appliqué sur un instrument de diagnostic moléculaire automatisé, comprenant :
un dispositif de perçage (2) comprenant un ensemble d'entraînement (22) et un élément de perçage (21), dans lequel l'ensemble d'entraînement (22) est configuré pour commander l'élément de perçage (21) afin de se déplacer de manière alternée vers une station de perçage et une station de nettoyage, dans lequel l'élément de perçage (21) est configuré pour percer un film de barrière d'une cartouche (5) qui se déplace vers la station de perçage ;
un dispositif de nettoyage (3) configuré pour nettoyer l'élément de perçage (21) qui se déplace vers la station de nettoyage ; et
un dispositif de transmission (1) comprenant un boîtier (11) et une partie de poussée (12),
**caractérisé en ce que** :
un passage de transmission (111) est agencé à l'intérieur du boîtier (11), la partie de poussée (12) est configurée pour pousser la cartouche (5) à se déplacer dans le passage de transmission (111),
l'ensemble d'entraînement (22) et le dispositif de nettoyage (3) sont chacun montés sur le boîtier (11) et un orifice de perçage (112), pour que l'élément de perçage (21) s'étende dans ce dernier, est agencé au niveau du boîtier (11), et
le boîtier (11) est prévu avec un orifice de remplissage (113) pour ajouter du réactif à la cartouche (5).

2. Système de prétraitement de cartouche appliqué sur un instrument de diagnostic moléculaire automatisé selon la revendication 1**,** dans lequel l'élément de perçage (21) comprend un cylindre, une extrémité supérieure du cylindre est raccordée à l'ensemble d'entraînement (22) et une extrémité inférieure du cylindre est réalisée à partir d'une structure pyramidale quadrangulaire.

3. Système de prétraitement de cartouche appliqué sur un instrument de diagnostic moléculaire automatisé selon la revendication 1, dans lequel l'ensemble d'entraînement (22) comprend une partie d'entraînement de levage (221) et une partie d'entraînement oscillante (222), dans lequel la partie d'entraînement de levage (221) est raccordée avec la partie d'entraînement oscillante (222) et est configurée pour commander le levage de la partie d'entraînement oscillante (222) et la partie d'entraînement oscillante (222) est raccordée avec l'élément de perçage (21) et configurée pour commander l'élément de perçage (21) pour qu'il oscille entre la station de perçage et la station de nettoyage.

4. Système de prétraitement de cartouche appliqué sur un instrument de diagnostic moléculaire automatisé selon la revendication 3, dans lequel :
la partie d'entraînement de levage (221) comprend un moteur de levage (2211) et un rail de guidage de levage (2212),
la partie d'entraînement oscillante (222) comprend un siège de fixation oscillant (2221), un moteur oscillant (2222) et un bras oscillant (2224),
le siège de fixation oscillant (2221) est fixé à une extrémité de sortie du moteur de levage (2211) et le siège de fixation oscillant (2221) est en ajustement coulissant avec le rail de guidage de levage (2212), et
le moteur oscillant (2222) est monté sur le siège de fixation oscillant (2221), un arbre de sortie du moteur oscillant (2222) est raccordé avec le bras oscillant (2224) par le biais d'un ensemble de transmission oscillant (2223), et l'élément de perçage (21) est fixé sur le bras oscillant (2224).

5. Système de prétraitement de cartouche appliqué sur un instrument de diagnostic moléculaire automatisé selon la revendication 1, comprenant en outre un dispositif de balayage d'information (4) pour scanner une étiquette au niveau d'un côté externe de la cartouche (5), dans lequel le dispositif de balayage d'information (4) est monté sur le boîtier (11) et un interstice de balayage de code, pour éviter le dispositif de balayage d'information (4), est agencé au niveau du boîtier (11) .

6. Système de prétraitement de cartouche appliqué sur un instrument de diagnostic moléculaire automatisé selon l'une quelconque des revendications 1 à 5, dans lequel le dispositif de nettoyage (3) comprend un trou de nettoyage (31) pour loger l'élément de perçage (21), un orifice de remplissage de liquide de nettoyage (32) pour que le liquide de nettoyage entre dans le trou de nettoyage (31) et un passage de décharge de liquide (33) pour décharger le liquide dans le trou de nettoyage (31).

7. Système de prétraitement de cartouche appliqué sur un instrument de diagnostic moléculaire automatisé selon la revendication 6, dans lequel le trou de nettoyage (31) a une ouverture vers le haut et est cylindrique, un axe de l'orifice de remplissage de liquide de nettoyage (32) est espacé d'un centre du trou de nettoyage (31) selon une distance prédéterminée, dans lequel le liquide de nettoyage forme un tourbillon dans le trou de nettoyage (31).

8. Système de prétraitement de cartouche appliqué sur un instrument de diagnostic moléculaire automatisé selon la revendication 7, dans lequel le nombre d'orifices de remplissage de liquide de nettoyage (32) est d'au moins deux, et la totalité des au moins deux orifices de remplissage de liquide de nettoyage (32) est répartie de manière séquentielle le long d'une direction circonférentielle du trou de nettoyage (31).
